# EUROPEAN PATENT SPECIFICATION

(11) **EP 4 253 737 B1**
(45) Date of publication and mention of the grant of the patent: **11.12.2024**
(21) Application number: 22183632.3
(22) Date of filing: 07.07.2022
(51) Int. Cl.: F01P 11/10, F01P 11/12, B60K 11/08, B60K 11/04, B60K 11/06, F01P 1/00

(54) **POWER COMPARTMENT AND ENGINEERING MACHINERY WITH SAME**
LEISTUNGSFACH UND BAUMASCHINEN DAMIT
COMPARTIMENT DE PUISSANCE ET MACHINES D'INGÉNIERIE L'UTILISANT

(30) Priority: 30.03.2022 CN 202210323604
(43) Date of publication of application: 04.10.2023
(73) Proprietor: Jiangsu XCMG Construction Machinery Research Institute Ltd., Xuzhou, Jiangsu 221004 (CN)
(72) Inventor: WANG, Huan, Xuzhou, Jiangsu, 221004 (CN); ZHUANG, Chao, Xuzhou, Jiangsu, 221004 (CN); WU, Chuang, Xuzhou, Jiangsu, 221004 (CN); LI, Meng, Xuzhou, Jiangsu, 221004 (CN)
(74) Representative: Prüfer & Partner mbB Patentanwälte · Rechtsanwälte

(56) References cited:
- CN-A- 108 952 962
- DE-A1- 3 916 920
- US-A- 3 888 327
- US-A1- 2010 018 798
- US-B1- 6 463 905

## Description

### CROSS REFERENCE TO RELATED APPLICATIONS

The present disclosure is based on and claims priority of an application with a CN application number of 202210323604.4 and an application date of March 30, 2022.

### FIELD OF THE DISCLOSURE

The present invention relates to the field of engineering machinery, and in particular, to a power compartment and an engineering machinery with the same.

### BACKGROUND OF THE DISCLOSURE

With the development of engineering machinery industry, people pay more and more attention to engineering machinery noise, and national standards have been established at home and abroad to limit the engineering machinery noise. The components of noise in the engineering machinery power compartment are complex, the noise is formed jointly by various noise components such as aerodynamic, mechanical transmission and hydraulic noise, and the noise is reflected and intervened by the wall surface for many times in the power compartment and then form a reverberation sound field to further increase the noise of the whole machine.

A cooling fan, as one of the most important noise sources in the power compartment, has important influence on the engineering machinery noise and the heat-dissipating property at the same time. The fan noise is vortex noise caused by that the fan blade periodically disturbs the air, and the periodical pressure pulse includes a steady fundamental frequency and a series of harmonic components. The air volume and noise frequency of the fan are directly in direct proportional to the rotating speed of the fan. The higher the rotating speed of the fan is, the higher the noise frequency, sound pressure level and cooling air volume of the fan are.

The power compartment hood is an important part of the engineering machinery, which plays a role in appearance, heat dissipation, isolation and absorption of noise in the power compartment. In order to cool a system, some air ports are formed in the power compartment hood, and these air ports directly transmit the noise in the power compartment. The air opening is a main path for noise transmission. The larger the area of the air ports is, the weaker the sound-insulating effect of the power compartment hood is.

The perforated plate resonance sound-absorbing structure includes a perforated plate-shaped material and a cavity on the back of the perforated plate-shaped material. The sound-eliminating frequency is related to the perforation rate of the perforated plate and the thickness of the cavity on the back. The smaller the thickness of the cavity on the back is, the higher the sound-eliminating frequency is.

Documents CN108952962B and US6463905B1 disclose engine compartments with ventilation facilities.

### SUMMARY OF THE DISCLOSURE

The present invention aims to provide a power compartment and an engineering machinery with the same, so as to improve the contradiction between the opening area and the sound-absorbing and sound-insulating property of the power compartment hood.

According to one aspect of the embodiments of the present invention, the present invention provides a power compartment. The power compartment includes:
a compartment;
an engine, arranged in the compartment and having a cooling liquid flow path for cooling liquid to circulate;
a radiator, arranged in the compartment and communicating with the cooling liquid flow path of the engine;
a ventilation port, arranged on the compartment and used to introduce air for exchanging heat with the radiator or discharge the air which has exchanged heat with the radiator; and
a noise-reducing unit, arranged on the ventilation port and including a first grille, a second grille and a first elastic part, wherein the first grille and the second grille are stacked along a thickness direction of a wall of the compartment, a distance between the second grille and the first grille is adjustable, the first elastic part pushes the first grille towards the second grille, the first grille includes a plurality of first air ports arranged in parallel and a first solid part located between the two adjacent first air ports, the second grille includes a plurality of second air ports arranged in parallel and a second solid part located between the two adjacent second air ports, and a projection of each second air opening in a plane vertical to a thickness direction partially or all overlaps a projection of the first solid part in the plane, so that air out of each second air opening drives the first grille away from the second grille.

In some embodiments, the power compartment further includes a third grille arranged on one side of the first grille away from the second grille, wherein the third grille includes a plurality of third air ports arranged in parallel and a third solid part located between the two adjacent third air ports, a projection of the third solid part in the plane partially or all overlaps a projection of the first solid part in the plane, the vehicle power compartment further includes a first shielding part, the first shielding part extends around the edge of the first solid part to form a first chamber together with the first solid part and the third solid part in an enclosing way, and the first solid part is provided with a plurality of first through holes communicating with the first chamber so as to form a perforated plate resonance sound-absorbing structure.

In some embodiments, the first shielding part includes a flexible part, and one end of the flexible part is connected to the first solid part and the other end is connected to the third solid part.

In some embodiments, a projection of each third air opening in the plane partially or all overlaps a projection of each first air opening in the plane.

In some embodiments, the first elastic part is arranged between the first grille and the third grille, and one end of the first elastic part abuts against the first grille and the other end abuts against the third grille.

In some embodiments,
the second grille, the first grille and the third grille are arranged sequentially from upstream to downstream along an air circulation direction in the ventilation port; or
the second grille, the second grille, the first grille and the third grille are arranged sequentially from downstream to upstream along an air circulation direction in the ventilation port.

In some embodiments,
the first grille is mounted in the ventilation port and is configured to slide along the thickness direction relative to the compartment so as to adjust a distance between the first grille and the second grille; and/or
the third grille is fixedly mounted in the ventilation port.

In some embodiments, the vehicle power compartment further includes a fourth grille arranged on one side of the second grille away from the first grille, wherein the fourth grille includes a plurality of fourth air ports arranged in parallel and a fourth solid part located between the two adjacent fourth air ports, and a projection of the fourth solid part in the plane partially or all overlaps a projection of the second solid part in the plane.

In some embodiments,
a projection of each fourth air opening in the plane partially or all overlaps a projection of each second air opening in the plane; and/or
a projection of each first air opening in the plane partially or all overlaps a projection of the second solid part in the plane.

In some embodiments,
the second grille is mounted in the ventilation port and is configured to slide along the thickness direction relative to the compartment so as to adjust a distance between the first grille and the second grille; and/or
the fourth grille is fixedly mounted in the ventilation port.

In some embodiments, the vehicle power compartment further includes a second elastic part for pressing the second grille towards the first grille, wherein the second elastic part is arranged between the second grille and the fourth grille.

In some embodiments, the vehicle power compartment further includes a second shielding part for extending around the edge of the second solid part to form a second chamber together with the second solid part and the fourth solid part in an enclosing way, wherein the fourth solid part is provided with a second through hole communicating with the second chamber so as to form a perforated plate resonance sound-absorbing structure.

In some embodiments, the second shielding part includes a first plate-shaped part and a second plate-shaped part which are arranged between the second grille and the fourth grille erectly,
the first plate-shaped part and the second plate-shaped part are fixedly connected to two sides of the second solid part respectively, and the fourth solid part is located between the first plate-shaped part and the second plate-shaped part and is capable of sliding along the thickness direction relative to the first-shaped part and the second plate-shaped part; or
the first plate-shaped part and the second plate-shaped part are fixedly connected to two sides of the fourth solid part respectively, and the second solid part is located between the first plate-shaped part and second plate-shaped part and is capable of sliding along the thickness direction relative to the first-shaped part and the second plate-shaped part.

In some embodiments,
the fourth grille, the second grille and the first grille are arranged sequentially from upstream to downstream along an air circulation direction in the ventilation port; or
the fourth grille, the second grille and the first grille are arranged sequentially from downstream to upstream along an air circulation direction in the ventilation port.

According to another aspect of the present invention, an engineering vehicle is further provided. The engineering vehicle includes the vehicle power compartment.

By application of the technical solution of the present application, in the process that the air flows towards the first grille from the second grille, the air passing through the second air opening applies a pressure to the first solid part. After the pressure is greater than an elastic force of the first elastic part, the first grille moves away from the second grille so as to form a circulation opening between the first grille and the second grille. The opening degree of the circulation opening is increased along with the increase of the pressure applied to the first solid part. The pressure applied by the air to the first solid part is positively related to the rotating speed of the fan for driving the air to flow through the radiator, and the noise frequency of the fan is positively related to the rotating speed of the fan. Therefore, the noise-reducing unit according to this embodiment can adjust the opening degree of the circulation opening according to the rotating speed of the fan. It can be ensured that the air flows smoothly on the premise of ensuring the sound-absorbing and sound-insulating effect, thereby improving the problem in the prior art that the heat dissipation of the power compartment is affected by the influence on air flowing by the sound-insulating part.

Other features and advantages of the present invention will become apparent by the detailed description for exemplary embodiments of the present invention with reference to the following accompany drawings.

### BRIEF DESCRIPTION OF THE ACCOMPANYING DRAWINGS

The drawings constituting a part of the present disclosure are used to provide a further understanding of the present disclosure, and the illustrative embodiments and the descriptions thereof in the present disclosure are used to explain the present disclosure, rather than improper limitations thereto. In the drawings:
FIG. 1 is a three-dimensional structural schematic diagram of a power compartment according to an embodiment of the present invention;
FIG. 2 is a structural schematic diagram according to an embodiment of the present invention when a noise-reducing unit is opened;
FIG. 3 is a schematic structural diagram according to an embodiment of the present invention when a noise-reducing unit is opened from another perspective;
FIG. 4 is a structural schematic diagram of a noise-reducing unit of a power compartment according to an embodiment of the present invention;
FIG. 5 is a structural schematic diagram of a noise-reducing unit of a power compartment according to an embodiment of the present invention from another perspective;
FIG. 6 is an exploded view of a structural schematic diagram of a noise-reducing unit of a power compartment according to an embodiment of the present invention;
FIG. 7 is a schematic diagram of an air flowing direction of a power compartment according to an embodiment of the present invention;
FIG. 8 is a schematic diagram of an air flowing direction of a noise-reducing unit on an air outlet of a power compartment according to an embodiment of the present invention;
FIG. 9 is a schematic diagram of an air flowing direction of a power compartment according to an embodiment of the present invention; and
FIG. 10 is a schematic diagram of an air flowing direction of a noise-reducing unit on an air inlet of a power compartment according to an embodiment of the present invention.

### DETAILED DESCRIPTION OF THE PREFERRED EMBODIMENTS

The following clearly and completely describes the technical solutions in the embodiments of the present invention with reference to accompanying drawings in the embodiments of the present invention. Apparently, the described embodiments are merely a part rather than all of the embodiments of the present invention. The following description of the at least one exemplary embodiment is actually merely illustrative and never constitutes any limitation to the present invention and application or use thereof. All other examples obtained by a person of ordinary skill in the art based on the examples of the present invention without creative efforts shall fall within the protection scope of the present invention. All other examples obtained by a person of ordinary skill in the art based on the examples of the present invention without creative efforts shall fall within the protection scope of the present invention.

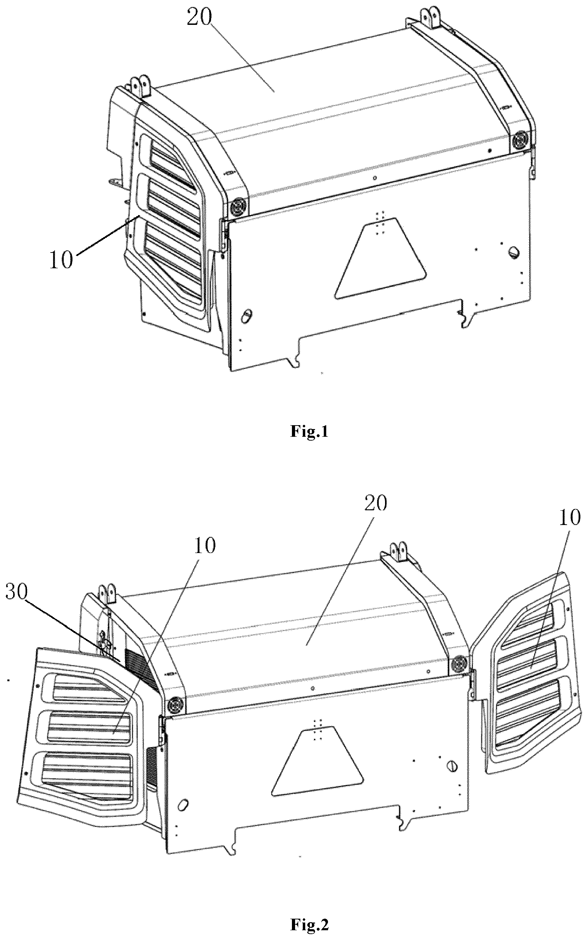

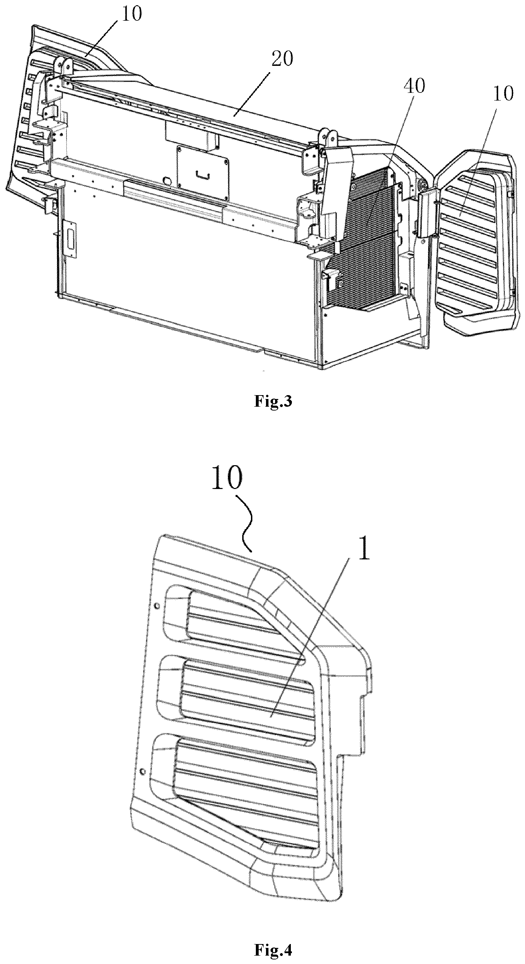

Referring to FIG. 1 to FIG. 7, the power compartment of this embodiment includes a compartment 20, an engine 60, a radiator 40, a ventilation port 30 and a noise-reducing unit 10. The engine 60 is arranged in the compartment 20 and has a cooling liquid flow path for cooling liquid to circulate. The radiator 40 is arranged in the compartment 20 and communicates with the cooling liquid flow path of the engine 60. The ventilation port 30 is arranged on the compartment 20 and is used to introduce air for exchanging heat with the radiator 3 or discharge the air which has exchanged heat with the radiator 40.

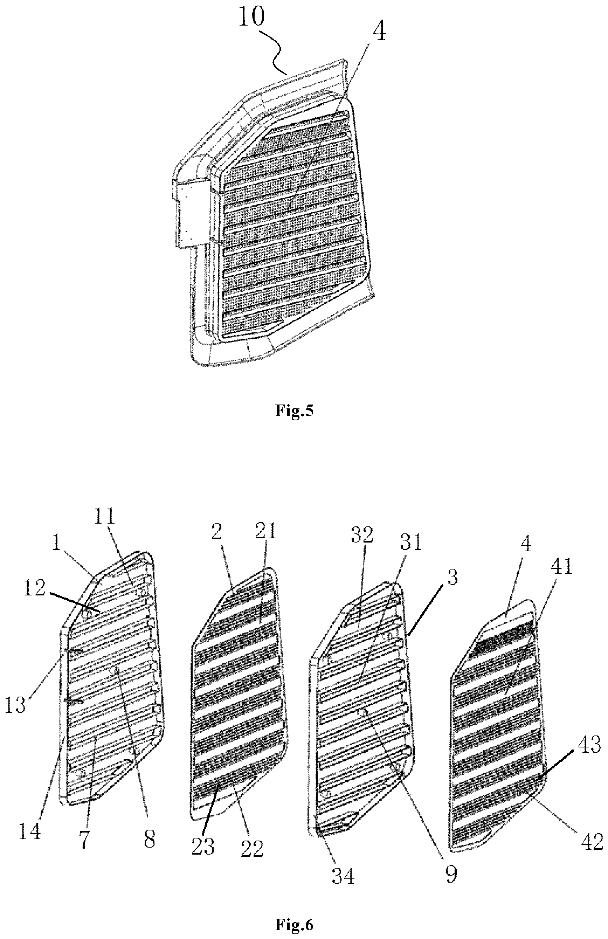

As shown in FIG. 6, the noise-reducing unit 10 is arranged on the ventilation port 30. The noise-reducing unit 10 includes a first grille 2, a second grille 3 and a first elastic part 8, wherein the first grille 2 and the second grille 3 are stacked along a thickness direction of a wall of the compartment 20, a distance between the second grille 3 and the first grille 2 is adjustable, the first elastic part 8 pushes and presses the first grille 2 towards the second grille 3, the first grille includes a plurality of first air ports 21 arranged in parallel and a first solid part 22 located between the two adjacent first air ports 21, the second grille 3 includes a plurality of second air ports 31 arranged in parallel and a second solid part 32 located between the two adjacent second air ports 31, and a projection of each second air opening 31 in a plane vertical to a thickness direction partially or all overlaps a projection of the first solid part 22 in the plane, so that air out of each second air opening 31 drives the first grille 2 away from the second grille 3.

In the process that the air flows towards the first grille 2 from the second grille 3, the air passing through the second air opening 31 applies a pressure to the first solid part 22. After the pressure is greater than an elastic force of the first elastic part 8, the first grille 2 moves away from the second grille 3 so as to form a circulation opening between the first grille 2 and the second grille 3. The opening degree of the circulation opening is increased along with the increase of the pressure applied to the first solid part 22. The pressure applied by the air to the first solid part 22 is positively related to the rotating speed of the fan 50 for driving the air to flow through the radiator 40, and the noise frequency of the fan 50 is positively related to the rotating speed of the fan 50. Therefore, the noise-reducing unit 1 according to this embodiment can adjust the opening degree of the circulation opening according to the rotating speed of the fan 50. It can be ensured that the air flows smoothly on the premise of ensuring the sound-insulating effect, thereby improving the problem in the prior art that the heat dissipation of the power compartment is affected by the influence on air flowing by the sound-insulating part.

In some embodiments, a projection of each second air opening 31 in a plane vertical to a thickness direction overlaps a projection of the first solid part 22 in the plane.

The power compartment further includes a third grille 1 which is arranged on one side of the first grille 2 away from the second grille 3; the third grille 1 includes a plurality of third air ports 11 arranged in parallel and a third solid part 12 located between the two adjacent third air ports 11; a projection of the third solid part 12 in the plane partially or all overlaps a projection of the first solid part 22 in the plane; the power compartment further includes a first shielding part 7; the first shielding part 7 extends around the edge of the first solid part 22 so as to form a first chamber 5 together with the first solid part 22 and the third solid part 12 in an enclosing way; and the first solid part 22 is provided with a plurality of first through holes 23 communicating with the first chamber 5 so as to form a perforated plate resonance sound-absorbing structure (a Helmholtz resonance sound-absorbing structure).

The thickness of the first chamber 5 is reduced along with the increase of the pressure applied by the air to the first solid part 22, the pressure applied by the air to the first solid part 22 is positively related to the rotating speed of the fan 50 for driving the air to flow through the radiator 40, and the noise frequency of the fan 50 is positively related to the rotating speed of the fan 50. Therefore, the noise-reducing unit 1 according to this embodiment can adjust the opening degree of the circulation opening and the thickness of the first chamber 5 according to the rotating speed of the fan 50, so that the resonance sound-absorbing frequency of the first chamber 5 is adjusted, the contradiction between the area and the sound-insulating property of the ventilation port 30 of the power compartment is solved, the opening degree of the circulation opening meets the heat-dissipating and noise-reducing requirements, and the heat-insulating, noise-reducing and heat-dissipating properties of the power compartment are synergistically improved.

In some embodiments, a projection of the third solid part 12 in the plane overlaps a projection of the first solid part 22 in the plane.

In some embodiments, the first shielding part 7 includes a flexible part, and one end of the flexible part is connected to the first solid part 22 and the other end is connected to the third solid part 12. When the first grille 2 overcomes the elastic force of the first elastic part 8 to move towards the third grille 1 under the action of the pressure of the air, the flexible part is shortened by becoming zigzag; and when the first grille 2 moves towards the second grille 3, the flexible part is lengthened by extending.

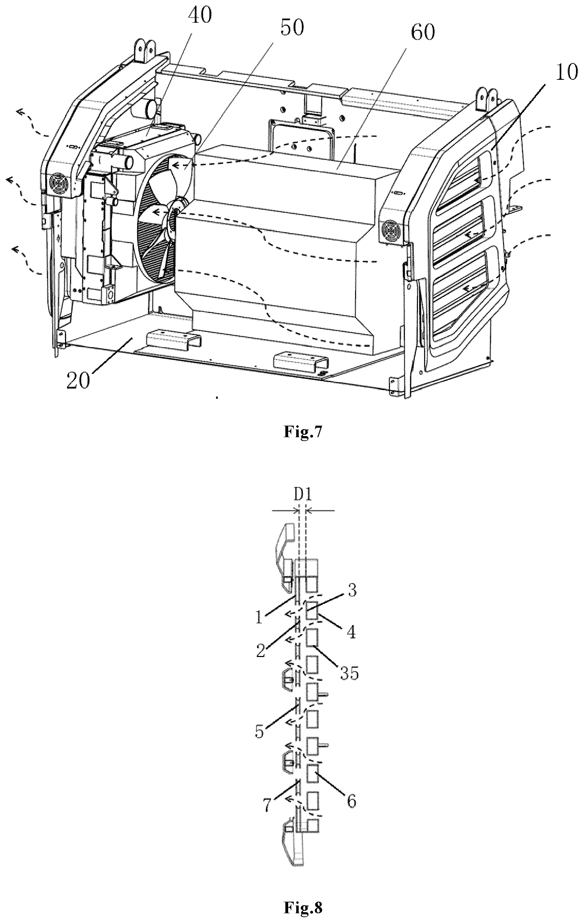

A projection of each third air opening 11 in the plane partially or all overlaps a projection of each first air opening 21 in the plane. As shown in FIG. 8, since the shielding part 7 extends along the edge of the first solid part 22, the shielding part forms a flow path for communicating the first air opening 21 with the third air opening 11 in an enclosing way. When the air flows towards the first grille 2 towards the second grille 3, the first grille 2 moves away from the second grille 3 under the action of the pressure of the air, so that a circulation opening is formed between the first grille 2 and the second grille 3, the air sequentially flows through the second air opening 31 on the second grille 3, the circulation opening formed between the second grille 3 and the first grille 2 and the flow path located between the first air opening 21 and the third air opening 11.

The first elastic part 8 is arranged between the first grille 2 and the third grille 1, and one end of the first elastic part 8 abuts against the first grille 2 and the other end abuts against the third grille 1.

The second grille 3, the first grille 2 and the third grille 1 are arranged sequentially from upstream to downstream along an air circulation direction in the ventilation port 30.

As shown in FIG. 1 to FIG. 3, FIG. 7 and FIG. 9, the vehicle power compartment includes two ventilation ports 30, and each ventilation port 30 is provided with a noise-reducing unit 10. One of the two ventilation ports 30 is an air inlet and the other one is an air outlet.

The two ventilation ports 30 are arranged at two ends of the engine 60 respectively. Optionally, the radiator 40, the fan 50 and the engine 60 are sequentially arranged between the two ventilation ports 30 in parallel.

In this embodiment, the third grilles 1 of two noise-reducing units 10 which are respectively arranged on the two ventilation ports 30 are located on an outer side of the first grille 2. In the noise-reducing unit 10 mounted on the air outlet, the second grille 3, the first grille 2 and the third grille 1 are arranged sequentially from upstream to downstream along an air circulation direction in the ventilation port 30. In the noise-reducing unit 10 mounted on the air inlet, the second grille 3, the first grille 2 and the third grille 1 are arranged sequentially from downstream to upstream along the air circulation direction in the ventilation port 30.

The noise-reducing unit of the power compartment according to this embodiment synergistically improve the heat-insulating, noise-reducing and heat-dissipating properties of a power compartment hood, and is suitable for the operation condition of airflow flowing in the power compartment bidirectionally.

As shown in FIG. 7, in some embodiments, the fan 50 is an air-blowing fan, the ventilation port 30 located at one end of the engine 60 away from the fan 50 is the air inlet, and the ventilation port 30 located at one end of the engine 60 adjacent to the fan 50 is the air outlet.

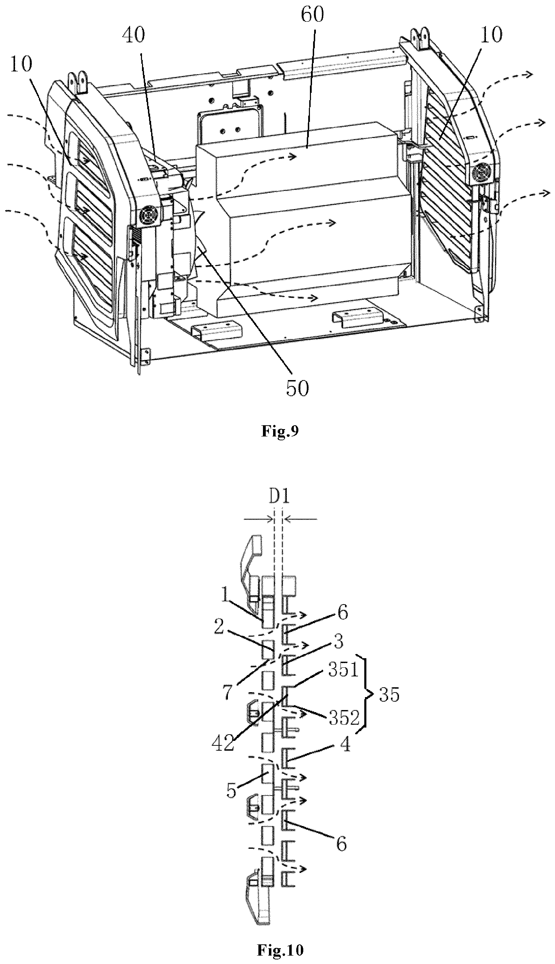

As shown in FIG. 9, in some other embodiments, the fan 50 is an air-absorbing fan, the ventilation port 30 located at one end of the engine 60 away from the fan 50 is the air outlet, and the ventilation port 30 located at one end of the engine 60 adjacent to the fan 50 is the air inlet.

In some other embodiments, in the two noise-reducing units 10 respectively mounted on the air inlet and the air outlet, the second grille 3, the first grille 2 and the third grille 1 are arranged sequentially from upstream to downstream along an air circulation direction in the ventilation port 30.

The first grille 2 is mounted in the ventilation port 30 and is configured to slide along the thickness direction relative to the compartment 20 so as to adjust a distance between the first grille 2 and the second grille 3. The third grille 1 is fixedly mounted in the ventilation port 30.

The noise-reducing unit 10 further includes a first guide part 14 for guiding the first grille 2 to move along the thickness direction of the wall of the compartment 20. Optionally, the first guide part 14 is arranged on the third grille 1.

As shown in FIG. 6, the power compartment further includes a fourth grille 4 arranged on one side of the second grille 3 away from the first grille 2; the fourth grille 4 includes a plurality of fourth air ports 41 arranged in parallel, and a fourth solid part 42 located between the two adjacent fourth air ports 41; and a projection of the fourth solid part 42 in a plane partially or all overlaps a projection of the second solid part 32 in the plane.

A projection of each fourth air opening 41 in the plane partially or all overlaps a projection of each second air opening 31 in the plane. A projection of each first air opening 21 in the plane partially or all overlaps a projection of the second solid part 32 in the plane.

The second grille 3 is mounted in the ventilation port 30 and is configured to slide along the thickness direction relative to the compartment 20 to adjust a distance between the first grille 2 and the second grille 3; and the fourth grille 4 is fixedly mounted in the ventilation port 30.

The noise-reducing unit 10 further includes a grille bracket 13, and the third grille 1 and the fourth grille 4 are fixedly connected to the grille bracket 13 respectively. The noise-reducing unit 10 further includes a second guide part 34 for guiding the second grille 3 to move along the thickness direction of the wall of the compartment 20.

The power compartment further includes a second elastic part 9 for pressing the second grille 3 towards the first grille 2, and the second elastic part 9 is arranged between the second grille 3 and the fourth grille 4.

The power compartment further includes a second shielding part 35 for extending around the edge of the second solid part 32 to form a second chamber 6 together with the second solid part 32 and the fourth solid part 42 in an enclosing way; and the fourth entity 42 part is provided with a second through hole 43 communicating with the second chamber 6 so as to form a perforated plate resonance sound-absorbing structure (a Helmholtz resonance sound-absorbing structure).

In the process that the air flows towards the second grille 3 from the first grille 2, the air passing through the first air opening 21 applies a pressure to the second solid part 32. After the pressure is greater than an elastic force of the second elastic part 9, the second grille 3 moves away from the first grille 2 so as to form a circulation opening between the first grille 2 and the second grille 3. The opening degree of the circulation opening is increased along with the increase of the pressure applied to the second solid part 32. The pressure applied by the air to the second solid part 32 is positively related to the rotating speed of the fan 50 for driving the air to flow through the radiator 40. Therefore, the noise-reducing unit in this embodiment can adjust the opening degree of the circulation opening according to the rotating speed of the fan 50.

The power compartment further includes a second shielding part 35 for extending around the edge of the second solid part 32 to form a second chamber 6 together with the second solid part 32 and the fourth solid part 42 in an enclosing way; and the fourth solid part 42 is provided with a second through hole 43 communicating with the second chamber 6 so as to form a perforated plate resonance sound-absorbing structure.

The thickness of the second chamber 6 is reduced along with the increase of the pressure applied by the air to the first solid part, the pressure applied by the air to the second solid part 32 is positively related to the rotating speed of the fan 50 for driving the air to flow through the radiator 40, and the noise frequency of the fan 50 is positively related to the rotating speed of the fan 50. Therefore, the noise-reducing unit 1 according to this embodiment can adjust the opening degree of the circulation opening and the thickness of the second chamber 6 according to the rotating speed of the fan 50, so that the resonance sound-absorbing frequency of the second chamber 6 is adjusted, the contradiction between the area and the sound-insulating property of the ventilation port 30 of the power compartment is solved, and the heat-insulating, noise-reducing and heat-dissipating properties of the power compartment are synergistically improved.

The second shielding part 35 includes a first plate-shaped part 351 and a second plate-shaped part 352 which are arranged between the second grille 3 and the fourth grille 4 erectly.

The first plate-shaped part 351 and the second plate-shaped part 352 are fixedly connected to two sides of the second solid part 32 respectively, and the fourth solid part 42 is located between the first plate-shaped part 351 and the second plate-shaped part 352 and can slide along the thickness direction relative to the first-shaped part 351 and the second plate-shaped part 352.

The first plate-shaped part 351 and the second plate-shaped part 352 are fixedly connected to two sides of the fourth solid part 42 respectively, and the second solid part 32 is located between the first plate-shaped part 351 and the second plate-shaped part 352 and can slide along the thickness direction relative to the first-shaped part 351 and the second plate-shaped part 352.

As shown in FIG. 7, in some embodiments, the fan 50 is an air-blowing fan, the ventilation port 30 located at one end of the engine 60 away from the fan 50 is the air inlet, and the ventilation port 30 located at one end of the engine 60 adjacent to the fan 50 is the air outlet. In the noise-reducing unit 10 mounted on the air outlet, the fourth grille 4, the second grille 3, the first grille 2 and the third grille 1 are arranged from inside to outside and sequentially from upstream to downstream along the air circulation direction in the ventilation port 30, as shown in FIG. 8. In the noise-reducing unit 10 mounted on the air inlet, the fourth grille 4, the second grille 3, the first grille 2 and the third grille 1 are arranged from inside to outside and sequentially from downstream to upstream along the air circulation direction in the ventilation port 30.

Various working conditions of the power compartment according to this embodiment are described below with reference to Table 1 and by taking the case where the fan 50 is an air-blowing fan as an example.

Working condition 1: the engine is in a stop state, the rotating speed of the fan 50 is 0, the noise-reducing unit 10 is in an initial sate, the first grille 2 and the second grille 3 are bonded together, the first solid part 22 plugs the second air opening 31, and at this time, the air outlet and the air inlet are in a closed and unventilated state and the air flow rate M of the power compartment is equal to 0.

Technical effect: the problem of blockage of the radiator 40 caused by long-term pollution in the power compartment by external dust is avoided.

Working condition 2: the engine is in a cold start state, water temperature is less than 80°C, and the noise frequency Fs0 is generated, and at this time, the rotating speed of the fan 50 is 0, the opening degree D1 of the circulation opening between the first grille 2 and the second grille 3 corresponding to the noise-reducing unit 10 of the air outlet is equal to 0, the thickness V1=V1max of the first chamber 5 is the maximum state, and the corresponding sound-eliminating frequency Fe1=Fe1min is minimum; and the opening degree D2 of the circulation opening between the first grille 2 and the third grille 3 corresponding to the noise-reducing unit 10 of the air inlet is equal to 0, the thickness V2=V2max of the second chamber 6 is the maximum state, the corresponding sound-eliminating frequency Fe2=Fe2min is minimum, and at this time, the air outlet and the air inlet are in a closed and unventilated state, and the air flow rate M of the power compartment is equal to 0.

Technical effects: the closed power compartment promotes the temperature of the engine to rapidly rise to the normal operation temperature higher than 80°C, so that the fuel economy of the engine is improved, and a good sound-insulating effect for the noise in a hood is achieved; meanwhile, the noise frequency Fs0 generated by the engine is effectively absorbed by the sound-eliminating frequency Fe1min generated by the first chamber 5 and the sound-eliminating frequency Fe2min generated by the second chamber 6.

Working condition 3: the engine is in a normal operation state, the rotating speed RpmFan of the fan 50 is a gear 1, and the engine 60 and the fan 50 generate the noise frequency Fs1.

The second grille 3 corresponding to the noise-reducing unit 10 of the air inlet is subjected to the negative pressure action generated by the cooling fan 50 to move along the second guide part 34 and is static after negative pressure balance is generated with the cooling fan 50 under the action of the second elastic part 9, cooling air flows into the power compartment, and at this time, the opening degree D2 of the circulation opening between the first grille 2 and the second grille 3 is equal to the opening degree 4, the thickness of the second chamber 6 is reduced, the thickness V2 of the second chamber 6 is equal to V21, and the corresponding sound-eliminating frequency Fe2 is equal to Fe21.

The first grille 2 corresponding to the noise-reducing unit 10 of the air outlet is subjected to the pressure action generated by the cooling fan 50 to move along the first guide part 14 and is static after pressure balance is generated with the cooling fan 50 under the action of the first elastic part 8, cooling air flows out of the power compartment, and at this time, the opening degree D1 of the circulation opening between the first grille 2 and the second grille 3 is equal to the opening degree 1, the thickness of the first chamber 5 is reduced, the thickness V1 of the first chamber 5 is equal to V11, and the corresponding sound-eliminating frequency Fe1 is equal to Fe11, and at this time, the air flow rate M of the power compartment is equal to 1.

Technical effects: at this time, the rotating speed of the fan 50 operates at a low speed, and the opening degree of the circulation opening between the first grille 2 and the second grille 3 is at a small position, which meets the air volume requirement and contributes to isolating the noise in the power compartment by the hood ventilation port; meanwhile, the noise frequency Fs1 generated by the engine and the fan is effectively absorbed by the noise-eliminating frequency Fe11 generated by the first chamber 5 and the sound-eliminating frequency Fe21 generated by the second chamber 6.

Working condition 4: the engine is in a normal operation state, the rotating speed RpmFan of the fan 50 is increased to a gear 2, and the noise frequency Fs2 generated by the engine and the fan is increased.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening degree D2 of the circulation opening between the first grille 2 and the second grille 3 is equal to the opening degree 5, the thickness of the second chamber 6 is reduced, the thickness V2 of the second chamber 6 is equal to V22, and the corresponding sound-eliminating frequency Fe2 is equal to Fe22.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D1 of the circulation opening between the first grille 2 and the second grille 3 is equal to the opening degree 2, the thickness of the first chamber 5 is further reduced, the thickness V1 of the first chamber 5 is equal to V12, and the corresponding sound-eliminating frequency Fe1 is equal to Fe12, and at this time, the air flow rate M of the power compartment is equal to 2.

Technical effects: at this time, the rotating speed of the fan operates at a medium speed, and the opening degree of the circulation opening between the first grille 2 and the second grille 3 is at an intermediate position, which meets the air volume requirement and contributes to isolating the noise in the power compartment by the hood ventilation port; the noise frequency Fs2 is increased while the rotating speed of the fan is increased, the thickness V1 of the first chamber 5 of the air outlet is reduced to increase the sound-eliminating frequency Fe12, and the thickness V2 of the second chamber 6 of the air inlet is reduced to increase the sound-eliminating frequency Fe22; and the noise frequency Fs2 generated by the engine and the fan is synchronously and effectively absorbed by the sound-eliminating frequency Fe12 generated by the first chamber 5 and the sound-eliminating frequency Fe22 generated by the second chamber 6 while changing.

Working condition 5: the engine is in a normal operation state, the rotating speed RpmFan of the fan 50 is increased to a gear 3, and the noise frequency Fs3 generated by the engine and the fan is further increased.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening D2 of the circulation opening between the first grille 2 and the second grille 3 is equal to the opening degree 6, the thickness of the second chamber 6 is reduced, the thickness V2 of the second chamber 6 is equal to V23, and the corresponding sound-eliminating frequency Fe2 is equal to Fe23.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D1 of the circulation opening between the first grille 2 and the second grille 3 is equal to the opening degree 3, the thickness of the first chamber 5 is further reduced, the thickness V1 of the first chamber 5 is equal to V13, and the corresponding sound-eliminating frequency Fe1 is equal to Fe13, and at this time, the air flow rate M of the power compartment is equal to 3.

Technical effects: at this time, the rotating speed of the fan operates at a high speed, and the opening degree of the circulation opening between the first grille 2 and the second grille 3 is at a large position, which meets the air volume requirement; the noise frequency Fs3 is increased while the rotating speed of the fan is increased, the thickness V1 of the first chamber 5 of the air outlet is reduced to increase the sound-eliminating frequency Fe13, and the thickness V2 of the second chamber 6 of the air inlet is reduced to increase the sound-eliminating frequency Fe23; and the noise frequency Fs3 generated by the engine and the fan is synchronously and effectively absorbed by the sound-eliminating frequency Fe13 generated by the first chamber 5 and the sound-eliminating frequency Fe23 generated by the second chamber 6 while changing.

Working condition 6: the engine is in a normal operation state, the rotating speed RpmFan of the fan 50 is a full speed, and the noise frequency Fs3 generated by the engine and the fan is the highest.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening degree D2 of the circulation opening between the first grille 2 and the second grille 3 is equal to fully open, the thickness of the second chamber 6 is reduced, the thickness V2 of the second chamber 6 is equal to V2min, and the corresponding sound-eliminating frequency Fe2 is the highest and equal to Fe2max.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D1 of the circulation opening between the first grille 2 and the second grille 3 is equal to fully open, the thickness of the first chamber 5 is further reduced, the thickness V1 of the first chamber 5 is equal to V1min, and the corresponding sound-eliminating frequency Fe1 is equal to Fe13, and at this time, the air flow rate M of the power compartment is equal to 4.

Technical effects: at this time, the rotating speed of the fan operates at a full speed, and the opening degree of the circulation opening between the first grille 2 and the second grille 3 is at the largest position, which meets the air volume requirement; the noise frequency Fs4 is increased while the rotating speed of the fan is increased, the thickness V1 of the first chamber 5 of the air outlet is reduced to increase the sound-eliminating frequency Fe1max, and the thickness V2 of the second chamber 6 of the air inlet is reduced to increase the sound-eliminating frequency Fe2max; and the noise frequency Fs4 generated by the engine and the fan is synchronously and effectively absorbed by the sound-eliminating frequency Fe1max generated by the first chamber 5 and the sound-eliminating frequency Fe2max generated by the second chamber 6 while changing.

**Table 1-Working mode of air-blowing fan**

| Type of Fan | | Air Blowing | | | | | | Remarks |
|---|---|---|---|---|---|---|---|---|
| Working conditions | | 1 | 2 | 3 | 4 | 5 | 6 | |
| State of engine | | Stop | Cold start | Operation | Operation | Operation | Operation | |
| Rotating speed RpmFan of fan | | 0 | 0 | Gear 1 | Gear 2 | Gear 3 | Full speed | 0<gear 1<gear 2<gear 3<full speed |
| Noise frequency Fs | | - | Fs0 | Fs1 | Fs2 | Fs3 | Fs4 | Fs0<Fs1 <Fs2<Fs3 <Fs4 |
| Air outlet | Opening degree D1 of grille | 0 | 0 | Opening degree 1 | Opening degree 2 | Opening degree 3 | Fully open | 0 < opening degree 1 < opening degree 2<opening degree 3 <fully open |
| | Thickness V1 of first chamber 5 | V1max | V1max | V11 | V12 | V13 | V1min | V2min<V23<V22<V21< V2max |
| | Sound-eliminating frequency Fe1 | Fe1min | Fe1min | Fe11 | Fe12 | Fe 13 | Fe1max | Fe1min<Fe11<Fe12<Fe13 <Fe1max |
| Air inlet | Opening degree D2 of grille | 0 | 0 | Opening degree 4 | Opening degree 5 | Opening degree 6 | Fully open | 0 < opening degree 1 < opening degree 2<opening degree 2 <fully open |
| | Thickness V2 of second chamber 6 | V2max | V2max | V21 | V22 | V23 | V2min | V1min<V13<V12<V11< V1max |
| | Sound-eliminating frequency Fe2 | Fe2min | Fe2min | Fe21 | Fe22 | Fe23 | Fe2max | Fe2min < Fe21 <Fe22<Fe23 <Fe2max |
| Air flow rate M | | 0 | 0 | M1 | M2 | M3 | M4 | 0<M1<M2<M3<M4 |

As shown in FIG. 9, in some other embodiments, the fan 50 is an air-absorbing fan, the ventilation port 30 located at one end of the engine 60 away from the fan 50 is the air outlet, and the ventilation port 30 located at one end of the engine 60 adjacent to the fan 50 is the air inlet. In the noise-reducing unit 10 mounted on the air inlet, the fourth grille 4, the second grille 3, the first grille 2 and the third grille 1 are arranged from inside to outside and sequentially from downstream to upstream along the air circulation direction in the ventilation port 30, as shown in FIG. 10. In the noise-reducing unit 10 mounted on the air outlet, the fourth grille 4, the second grille 3, the first grille 2 and the third grille 1 are arranged from inside to outside and sequentially from upstream to downstream along the air circulation direction in the ventilation port 30.

Various working conditions of the vehicle power compartment according to this embodiment are described below with reference to Table 2 and by taking the case where the fan 50 is an air-absorbing fan as an example.

Working condition 1: the engine is in a stop state, the rotating speed of the fan is 0, the noise-reducing unit 10 is in an initial sate, and at this time, the air inlet and the air outlet are in a closed and unventilated state and the air flow rate M of the power compartment is equal to 0.

Technical effect: the problem of blockage of a heat exchange module caused by long-term pollution in the power compartment by external dust is avoided.

Working condition 2: the engine is in a cold start state, water temperature is less than 80°C, and the noise frequency Fs0 is generated, and at this time, the rotating speed of the fan is 0, the opening degree D1 of the circulation opening between the first grille 2 and the second grille 3 corresponding to the noise-reducing unit 10 of the air inlet is equal to 0, the thickness V2=V2max of the first chamber 6 is the maximum state, and the corresponding sound-eliminating frequency Fe2=Fe2min is minimum; and the opening degree D2 of the circulation opening between the first grille 2 and the third grille 3 corresponding to the noise-reducing unit 10 of the air outlet is equal to 0, the thickness V1=V1max of the second chamber 5 is the maximum state, the corresponding sound-eliminating frequency Fe1=Fe1min is minimum, and at this time, the air inlet and the air outlet are in a closed and unventilated state, and the air flow rate M of the power compartment is equal to 0.

Technical effects: the closed power compartment promotes the temperature of the engine to rapidly rise to the normal operation temperature higher than 80°C, so that the fuel economy of the engine is improved, and a good sound-insulating effect for the noise in a hood is achieved; meanwhile, the noise frequency Fs0 generated by the engine is effectively absorbed by the sound-eliminating frequency Fe1min generated by the first chamber 5 and the sound-eliminating frequency Fe2min generated by the second chamber 6.

Working condition 3: the engine is in a normal operation state, the rotating speed RpmFan of the fan 50 is a gear 1, and the engine and the fan generate the noise frequency Fs1.

The second grille 3 corresponding to the noise-reducing unit 10 of the air inlet is subjected to the negative pressure action generated by the cooling fan 50 to move along the second guide part 34 and is static after negative pressure balance is generated with the cooling fan 50 under the action of the second elastic part 9, cooling air flows into the power compartment, and at this time, the opening degree D1 of the circulation opening between the first grille 2 and the second grille 3 is equal to the opening degree 1, the thickness of the second chamber 6 is reduced, the thickness V2 of the second chamber 6 is equal to V21, and the corresponding sound-eliminating frequency Fe2 is equal to Fe21.

The first grille 2 corresponding to the noise-reducing unit 10 of the air outlet is subjected to the pressure action generated by the cooling fan 50 to move along the first guide part 14 and is static after pressure balance is generated with the cooling fan 50 under the action of the first elastic part 8, cooling air flows out of the power compartment, and at this time, the opening degree D2 of the circulation opening between the first grille 2 and the second grille 3 is equal to the opening degree 4, the thickness of the first chamber 5 is reduced, the thickness V1 of the first chamber 5 is equal to V11, and the corresponding sound-eliminating frequency Fe1 is equal to Fe11, and at this time, the air flow rate M of the power compartment is equal to 1.

Technical effects: at this time, the rotating speed of the fan operates at a low speed, and the opening degree of the circulation opening between the first grille 2 and the second grille 3 is at a small position, which meets the air volume requirement and contributes to isolating the noise in the power compartment by the hood ventilation port; meanwhile, the noise frequency Fs1 generated by the engine 60 and the fan 50 is effectively absorbed by the noise-eliminating frequency Fe11 generated by the first chamber 5 and the sound-eliminating frequency Fe21 generated by the second chamber 6.

Working condition 4: the engine is in a normal operation state, the rotating speed RpmFan of the fan 50 is increased to a gear 2, and the noise frequency Fs2 generated by the engine 60 and the fan 50 is increased.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening degree D1 of the circulation opening between the first grille 2 and the second grille 3 is equal to the opening degree 2, the thickness of the second chamber 6 is reduced, the thickness V2 of the second chamber 6 is equal to V22, and the corresponding sound-eliminating frequency Fe2 is equal to Fe22.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D2 of the circulation opening between the first grille 2 and the second grille 3 is equal to the opening degree 5, the thickness of the first chamber 5 is further reduced, the thickness V1 of the first chamber 5 is equal to V12, and the corresponding sound-eliminating frequency Fe1 is equal to Fe12, and at this time, the air flow rate M of the power compartment is equal to 2.

Technical effects: at this time, the rotating speed of the fan operates at a medium speed, and the opening degree of the circulation opening between the first grille 2 and the second grille 3 is at an intermediate position, which meets the air volume requirement and contributes to isolating the noise in the power compartment by the hood ventilation port; the noise frequency Fs2 is increased while the rotating speed of the fan is increased, the thickness V2 of the second chamber 6 of the air inlet is reduced to increase the sound-eliminating frequency Fe22, and the thickness V1 of the first chamber 5 of the air outlet is reduced to increase the sound-eliminating frequency Fe12; and the noise frequency Fs2 generated by the engine and the fan is synchronously and effectively absorbed by the sound-eliminating frequency Fe12 generated by the first chamber 5 and the sound-eliminating frequency Fe22 generated by the second chamber 6 while changing.

Working condition 5: the engine is in a normal operation state, the rotating speed RpmFan of the fan 50 is increased to a gear 3, and the noise frequency Fs3 generated by the engine and the fan is further increased.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening degree D1 of the circulation opening between the first grille 2 and the second grille 3 is equal to the opening degree 3, the thickness of the second chamber 6 is reduced, the thickness V2 of the second chamber 6 is equal to V23, and the corresponding sound-eliminating frequency Fe2 is equal to Fe23.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D2 of the circulation opening between the first grille 2 and the second grille 3 is equal to the opening degree 6, the thickness of the first chamber 5 is further reduced, the thickness V1 of the first chamber 5 is equal to V13, and the corresponding sound-eliminating frequency Fe1 is equal to Fe13, and at this time, the air flow rate M of the power compartment is equal to 3.

Technical effects: at this time, the rotating speed of the fan operates at a high speed, and the opening degree of the circulation opening between the first grille 2 and the second grille 3 is at a large position, which meets the air volume requirement; the noise frequency Fs3 is increased while the rotating speed of the fan is increased, the thickness V3 of the second chamber 6 of the air inlet is reduced to increase the sound-eliminating frequency Fe23, and the thickness V1 of the first chamber 5 of the air outlet is reduced to increase the sound-eliminating frequency Fe13; and the noise frequency Fs3 generated by the engine and the fan is synchronously and effectively absorbed by the sound-eliminating frequency Fe13 generated by the first chamber 5 and the sound-eliminating frequency Fe23 generated by the second chamber 6 while changing.

Working condition 6: the engine is in a normal operation state, the rotating speed RpmFan of the fan 50 is a full speed, and the noise frequency Fs3 generated by the engine and the fan is the highest.

The second grille 3 corresponding to the noise-reducing unit 10 of the air inlet is subjected to the negative pressure action generated by the cooling fan 50 to further move towards the fourth grille 4 along the second guide part 34 and is static after negative pressure balance is generated with the cooling fan 50 under the action of the second elastic part 9, cooling air flows into the power compartment, and at this time, the opening degree D1 of the circulation opening between the first grille 2 and the second grille 3 is equal to fully open, the thickness of the second chamber 6 is reduced, the thickness V2 of the second chamber 6 is equal to V2min, and the corresponding sound-eliminating frequency Fe2 is the highest and equal to Fe2max.

The first grille 2 corresponding to the noise-reducing unit 10 of the air outlet is subjected to the pressure action generated by the cooling fan 50 to further move towards the third grille 1 along the first guide part 14 and is static after pressure balance is generated with the cooling fan 50 under the action of the first elastic part 8, cooling air flows out of the power compartment, and at this time, the opening degree D2 of the circulation opening between the first grille 2 and the second grille 3 is equal to fully open, the thickness of the first chamber 5 is further reduced, the thickness V1 of the first chamber 5 is equal to V1min, and the corresponding sound-eliminating frequency Fe1 is equal to Fe13, and at this time, the air flow rate M of the power compartment is equal to 4.

Technical effects: at this time, the rotating speed of the fan operates at a full speed, and the opening degree of the circulation opening between the first grille 2 and the second grille 3 is at the largest position, which meets the air volume requirement; the noise frequency Fs4 is increased while the rotating speed of the fan is increased, the thickness V2 of the second chamber 6 of the air inlet is reduced to increase the sound-eliminating frequency Fe2max, and the thickness V1 of the first chamber 5 of the air outlet is reduced to increase the sound-eliminating frequency Fe1max; and the noise frequency Fs4 generated by the engine and the fan is synchronously and effectively absorbed by the sound-eliminating frequency Fe1max generated by the first chamber 5 and the sound-eliminating frequency Fe2max generated by the second chamber 6 while changing.

**Table 2-Working mode of air-absorbing fan**

| Type of Fan | | Air Absorbing | | | | | | Remarks |
|---|---|---|---|---|---|---|---|---|
| Working conditions | | 1 | 2 | 3 | 4 | 5 | 6 | |
| State of engine | | Stop | Cold start | Operation | Operation | Operation | Operation | |
| Rotating speed RpmFan of fan | | 0 | 0 | Gear 1 | Gear 2 | Gear 3 | Full speed | 0<gear 1<gear 2<gear 3<full speed |
| Noise frequency Fs | | - | Fs0 | Fs1 | Fs2 | Fs3 | Fs4 | Fs0<Fs1<Fs2<Fs3<Fs4 |
| Air inlet | Opening degree D1 of grille | 0 | 0 | Opening degree 1 | Opening degree 2 | Opening degree 3 | Fully open | 0<opening degree 1 < opening degree 2<opening degree 3 <fully open |
| | Thickness V2 of second chamber 6 | V2max | V2max | V21 | V22 | V23 | V2min | V2min< V23 < V22 < V21 < V2max |
| | Sound-eliminating frequency Fe2 | Fe2min | Fe2min | Fe21 | Fe22 | Fe23 | Fe2max | Fe2min<Fe21<Fe22< Fe23 < Fe2max |
| Air outlet | Opening degree D2 of grille | 0 | 0 | Opening degree 4 | Opening degree 5 | Opening degree 6 | Fully open | 0<opening degree 1 < opening degree 2<opening degree 3 <fully open |
| | First chamber Thickness V1 | V1max | V1max | V11 | V12 | V13 | V1min | V1min<V13<V12<V11< V1max |
| | Sound-eliminating frequency Fe1 | Fe1min | Fe1min | Fe11 | Fe12 | Fe13 | Fe1max | Fe1min<Fe11<Fe12<Fe13 <Fe1max |
| Air flow rate M | | 0 | 0 | M1 | M2 | M3 | M4 | 0<M1<M2<M3<M4 |

## Claims

1. A power compartment, comprising:
a compartment (20);
an engine (60), arranged in the compartment (20) and having a cooling liquid flow path for cooling liquid to circulate;
a radiator (40), arranged in the compartment (20) and communicating with the cooling liquid flow path of the engine (60);
a ventilation port (30), arranged on the compartment (20) to introduce air for exchanging heat with the radiator (40) or discharge the air which has exchanged heat with the radiator (40); **characterized in that** it further comprises
a noise-reducing unit (10), arranged on the ventilation port (30) and comprising a first grille (2), a second grille (3) and a first elastic part (8), wherein the first grille (2) and the second grille (3) are stacked along a thickness direction of a wall of the compartment (20), a distance between the second grille (3) and the first grille (2) is adjustable, the first elastic part (8) configured to push the first grille (2) towards the second grille (3), the first grille (2) comprises a plurality of first air ports (21) arranged in parallel and a first solid part (22) located between the two adjacent first air ports (21), the second grille (3) comprises a plurality of second air ports (31) arranged in parallel and a second solid part (32) located between the two adjacent second air ports (31), and a projection of each second air opening (31) in a plane vertical to a thickness direction partially or all overlaps a projection of the first solid part (22) in the plane, so that air from each second air opening (31) drives the first grille (2) away from the second grille (3).

2. The power compartment according to claim 1, further comprising a third grille (1) arranged on a side of the first grille (2) away from the second grille (3), wherein the third grille (1) comprises a plurality of third air ports (11) arranged in parallel and a third solid part (12) located between the two adjacent third air ports (11), a projection of the third solid part (12) in the plane partially or all overlaps a projection of the first solid part (22) in the plane, the vehicle power compartment further comprises a first shielding part (7), the first shielding part (7) extends around the edge of the first solid part (22) to form a first chamber (5) together with the first solid part (22) and the third solid part (12) in an enclosing way, and the first solid part (22) is provided with a plurality of first through holes (23) communicating with the first chamber (5) so as to form a perforated plate resonance sound-absorbing structure.

3. The power compartment according to claim 2, wherein the first shielding part (7) comprises a flexible part, and one end of the flexible part is connected to the first solid part (22) and the other end is connected to the third solid part (12).

4. The power compartment according to claim 2 or 3, wherein a projection of each third air opening (11) in the plane partially or all overlaps a projection of each first air opening (21) in the plane.

5. The power compartment according to any one of claims 2 to 4, wherein the first elastic part (8) is arranged between the first grille (2) and the third grille (1), and one end of the first elastic part (8) abuts against the first grille (2) and the other end thereof abuts against the third grille (3) so as to push the first grille (2) towards the second grille (3).

6. The power compartment according to claim any one of claims 2 to 5, wherein
the second grille (3), the first grille (2) and the third grille (1) are arranged sequentially from upstream to downstream along an air circulation direction in the ventilation port (30); or
the second grille (3), the first grille (2) and the third grille (1) are arranged sequentially from downstream to upstream along an air circulation direction in the ventilation port (30).

7. The power compartment according to any one of claims 1 to 6, wherein
the first grille (2) is mounted in the ventilation port (30) and is configured to slide along the thickness direction relative to the compartment (20) so as to adjust a distance between the first grille (2) and the second grille (3); and/or
the third grille (1) is fixedly mounted in the ventilation port (30).

8. The power compartment according to any one of claims 1 to 7, further comprising a fourth grille (4) arranged on one side of the second grille (3) away from the first grille (2), wherein the fourth grille (4) comprises a plurality of fourth air ports (41) arranged in parallel and a fourth solid part (42) located between the two adjacent fourth air ports (41), and a projection of the fourth solid part (42) in the plane partially or all overlaps a projection of the second solid part (32) in the plane.

9. The power compartment according to claim 8, wherein
a projection of each fourth air opening (41) in the plane partially or all overlaps a projection of each second air opening (31) in the plane; and/or
a projection of each first air opening (21) in the plane partially or all overlaps a projection of the second solid part (32) in the plane.

10. The power compartment according to claim 8 or 9, wherein
the second grille (3) is mounted in the ventilation port (30) and is configured to slide along the thickness direction relative to the compartment (20) so as to adjust a distance between the first grille (2) and the second grille (3); and/or
the fourth grille (4) is fixedly mounted in the ventilation port (30).

11. The power compartment according to claim 10, further comprising a second elastic part (9) for pressing the second grille (3) towards the first grille (2), wherein the second elastic part (9) is arranged between the second grille (3) and the fourth grille (4).

12. The power compartment according to any one of claims 8 to 11, further comprising a second shielding part (35) extending around the edge of the second solid part (32) to form a second chamber (6) together with the second solid part (32) and the fourth solid part (42) in an enclosing way, wherein the fourth solid part (42) is provided with a second through hole (43) communicating with the second chamber (6) so as to form a perforated plate resonance sound-absorbing structure.

13. The power compartment according to claim 12, wherein the second shielding part (35) comprises a first plate-shaped part (351) and a second plate-shaped part (352) which are arranged between the second grille (3) and the fourth grille (4);
the first plate-shaped part (351) and the second plate-shaped part (352) are fixedly connected to two sides of the second solid part (32) respectively, and the fourth solid part (42) is located between the first plate-shaped part (351) and the second plate-shaped part (352) and is capable of sliding along the thickness direction relative to the first plate-shaped part (351) and the second plate-shaped part (352); or
the first plate-shaped part (351) and the second plate-shaped part (352) are fixedly connected to two sides of the fourth solid part (42) respectively, and the second solid part (32) is located between the first plate-shaped part (351) and the second plate-shaped part (352) and is capable of sliding along the thickness direction relative to the first plate-shaped part (351) and the second plate-shaped part (352).

14. The power compartment according to claim any one of claims 8 to 13, wherein
the fourth grille (4), the second grille (3) and the first grille (2) are arranged sequentially from upstream to downstream along an air circulation direction in the ventilation port (30); or
the fourth grille (4), the second grille (3) and the first grille (2) are arranged sequentially from downstream to upstream along an air circulation direction in the ventilation port (30).

15. An engineering machinery, comprising the power compartment according to any one of claims 1 to 14.

## Patentansprüche

1. Ein Motorraum, umfassend:
einen Raum (20);
einen Motor (60), der in dem Raum (20) angeordnet ist und einen Kühlflüssigkeitsströmungsweg zum Zirkulieren von Kühlflüssigkeit aufweist;
einen Kühler (40), der in dem Raum (20) angeordnet ist und mit dem Kühlflüssigkeitsströmungsweg des Motors (60) in Verbindung steht;
eine Belüftungsöffnung (30), die an dem Raum (20) angeordnet ist, um Luft zum Austauschen von Wärme mit dem Kühler (40) einzuführen oder die Luft, die Wärme mit dem Kühler (40) ausgetauscht hat, abzugeben; **dadurch gekennzeichnet, dass** er weiterhin umfasst
eine geräuschreduzierende Einheit (10), die an der Belüftungsöffnung (30) angeordnet ist und ein erstes Gitter (2), ein zweites Gitter (3) und einen erstes elastisches Teil (8) umfasst, wobei das erste Gitter (2) und das zweite Gitter (3) entlang einer Dickenrichtung einer Wand des Raums (20) gestapelt sind, ein Abstand zwischen dem zweiten Gitter (3) und dem ersten Gitter (2) einstellbar ist, das erste elastische Teil (8) konfiguriert ist, um das erste Gitter (2) in Richtung des zweiten Gitters (3) zu drücken, das erste Gitter (2) eine Mehrzahl von ersten Luftöffnungen (21), die parallel angeordnet sind, und einen ersten festen Teil (22), der zwischen den zwei benachbarten ersten Luftöffnungen (21) angeordnet ist, umfasst, das zweite Gitter (3) eine Mehrzahl von zweiten Luftöffnungen (31), die parallel angeordnet sind, und einen zweiten festen Teil (32), der zwischen den zwei benachbarten zweiten Luftöffnungen (31) angeordnet ist, umfasst, und ein Vorsprung jeder zweiten Luftöffnung (31) in einer Ebene senkrecht zu einer Dickenrichtung einen Vorsprung des ersten festen Teils (22) in der Ebene teilweise oder vollständig überlappt, so dass Luft von jeder zweiten Luftöffnung (31) das erste Gitter (2) von dem zweiten Gitter (3) wegbewegt.

2. Der Motorraum gemäß Anspruch 1, ferner umfassend ein drittes Gitter (1), das an einer Seite des ersten Gitters (2) entfernt von dem zweiten Gitter (3) angeordnet ist, wobei das dritte Gitter (1) eine Mehrzahl von dritten Luftöffnungen (11), die parallel angeordnet sind, und einen dritten festen Teil (12), der zwischen den zwei benachbarten dritten Luftöffnungen (11) angeordnet ist, umfasst, ein Vorsprung des dritten festen Teils (12) in der Ebene einen Vorsprung des ersten festen Teils (22) in der Ebene teilweise oder vollständig überlappt, der Fahrzeugmotorraum ferner ein erstes Abschirmteil (7) umfasst, das erste Abschirmteil (7) sich um den Rand des ersten festen Teils (22) erstreckt, um eine erste Kammer (5) zusammen mit dem ersten festen Teil (22) und dem dritten festen Teil (12) in einer umschließenden Weise auszubilden, und das erste feste Teil (22) mit einer Mehrzahl von ersten Durchgangslöchern (23) versehen ist, die mit der ersten Kammer (5) in Verbindung stehen, um eine perforierte Plattenresonanz schallabsorbierende Struktur auszubilden.

3. Der Motorraum gemäß Anspruch 2, wobei das erste Abschirmteil (7) ein flexibles Teil umfasst, und ein Ende des flexiblen Teils mit dem ersten festen Teil (22) verbunden ist und das andere Ende mit dem dritten festen Teil (12) verbunden ist.

4. Der Motorraum gemäß Anspruch 2 oder 3, wobei ein Vorsprung jeder dritten Luftöffnung (11) in der Ebene einen Vorsprung jeder ersten Luftöffnung (21) in der Ebene teilweise oder vollständig überlappt.

5. Der Motorraum gemäß einem der Ansprüche 2 bis 4, wobei das erste elastische Teil (8) zwischen dem ersten Gitter (2) und dem dritten Gitter (1) angeordnet ist, und ein Ende des ersten elastischen Teils (8) an dem ersten Gitter (2) anliegt und das andere Ende davon an dem dritten Gitter (3) anliegt, um das erste Gitter (2) in Richtung des zweiten Gitters (3) zu drücken.

6. Der Motorraum gemäß einem der Ansprüche 2 bis 5, wobei
das zweite Gitter (3), das erste Gitter (2) und das dritte Gitter (1) sequenziell von stromaufwärts nach stromabwärts entlang einer Luftzirkulationsrichtung in der Belüftungsöffnung (30) angeordnet sind; oder
das zweite Gitter (3), das erste Gitter (2) und das dritte Gitter (1) sequenziell von stromabwärts nach stromaufwärts entlang einer Luftzirkulationsrichtung in der Belüftungsöffnung (30) angeordnet sind.

7. Der Motorraum gemäß einem der Ansprüche 1 bis 6, wobei
das erste Gitter (2) in der Belüftungsöffnung (30) montiert ist und konfiguriert ist, um entlang der Dickenrichtung relativ zu dem Raum (20) zu gleiten, um einen Abstand zwischen dem ersten Gitter (2) und dem zweiten Gitter (3) anzupassen; und/oder
das dritte Gitter (1) fest in der Belüftungsöffnung (30) montiert ist.

8. Der Motorraum gemäß einem der Ansprüche 1 bis 7, weiterhin enthaltend ein viertes Gitter (4), das auf einer Seite des zweiten Gitters (3) entfernt von dem ersten Gitter (2) angeordnet ist, wobei das vierte Gitter (4) eine Mehrzahl von vierten Luftöffnungen (41), die parallel angeordnet sind, und ein viertes festes Teil (42), das zwischen den zwei benachbarten vierten Luftöffnungen (41) angeordnet ist, umfasst, und ein Vorsprung des vierten festen Teils (42) in der Ebene einen Vorsprung des zweiten festen Teils (32) in der Ebene teilweise oder vollständig überlappt.

9. Der Motorraum gemäß Anspruch 8, wobei
ein Vorsprung jeder vierten Luftöffnung (41) in der Ebene einen Vorsprung jeder zweiten Luftöffnung (31) in der Ebene teilweise oder vollständig überlappt; und/oder
ein Vorsprung jeder ersten Luftöffnung (21) in der Ebene einen Vorsprung des zweiten festen Teils (32) in der Ebene teilweise oder vollständig überlappt.

10. Der Motorraum gemäß Anspruch 8 oder 9, wobei
das zweite Gitter (3) in der Belüftungsöffnung (30) montiert ist und konfiguriert ist, um entlang der Dickenrichtung relativ zu dem Raum (20) zu gleiten, um einen Abstand zwischen dem ersten Gitter (2) und dem zweiten Gitter (3) anzupassen; und/oder
das vierte Gitter (4) fest in der Belüftungsöffnung (30) montiert ist.

11. Der Motorraum gemäß Anspruch 10, ferner umfassend ein zweites elastisches Teil (9) zum Drücken des zweiten Gitters (3) in Richtung des ersten Gitters (2), wobei das zweite elastische Teil (9) zwischen dem zweiten Gitter (3) und dem vierten Gitter (4) angeordnet ist.

12. Der Motorraum gemäß einem der Ansprüche 8 bis 11, ferner umfassend ein zweites Abschirmteil (35), das sich um den Rand des zweiten festen Teils (32) erstreckt, um eine zweite Kammer (6) zusammen mit dem zweiten festen Teil (32) und dem vierten festen Teil (42) in einer umschließenden Weise auszubilden, wobei das vierte feste Teil (42) mit einem zweiten Durchgangsloch (43) versehen ist, das mit der zweiten Kammer (6) in Verbindung steht, um eine perforierte Plattenresonanz schallabsorbierende Struktur auszubilden.

13. Der Motorraum gemäß Anspruch 12, wobei das zweite Abschirmteil (35) ein erstes plattenförmiges Teil (351) und ein zweites plattenförmiges Teil (352) umfasst, die zwischen dem zweiten Gitter (3) und dem vierten Gitter (4) angeordnet sind;
das erste plattenförmige Teil (351) und das zweite plattenförmige Teil (352) jeweils fest mit zwei Seiten des zweiten festen Teils (32) verbunden sind, und der vierte feste Teil (42) zwischen dem ersten plattenförmigen Teil (351) und dem zweiten plattenförmigen Teil (352) angeordnet ist und in der Lage ist, entlang der Dickenrichtung relativ zu dem ersten plattenförmigen Teil (351) und dem zweiten plattenförmigen Teil (352) zu gleiten; oder
das erste plattenförmige Teil (351) und das zweite plattenförmige Teil (352) jeweils fest mit zwei Seiten des vierten festen Teils (42) verbunden sind, und der zweite feste Teil (32) zwischen dem ersten plattenförmigen Teil (351) und dem zweiten plattenförmigen Teil (352) angeordnet ist und in der Lage ist, entlang der Dickenrichtung relativ zu dem ersten plattenförmigen Teil (351) und dem zweiten plattenförmigen Teil (352) zu gleiten.

14. Der Motorraum gemäß einem der Ansprüche 8 bis 13, wobei
das vierte Gitter (4), das zweite Gitter (3) und das erste Gitter (2) sequenziell von stromaufwärts nach stromabwärts entlang einer Luftzirkulationsrichtung in der Belüftungsöffnung (30) angeordnet sind; oder
das vierte Gitter (4), das zweite Gitter (3) und das erste Gitter (2) sequenziell von stromabwärts nach stromaufwärts entlang einer Luftzirkulationsrichtung in der Belüftungsöffnung (30) angeordnet sind.

15. Eine Baumaschine, umfassend den Motorraum gemäß einem der Ansprüche 1 bis 14.

## Revendications

1. Un compartiment de puissance, comprenant :
un compartiment (20) ;
un moteur (60), disposé dans le compartiment (20) et ayant un chemin d'écoulement de liquide de refroidissement pour que le liquide de refroidissement circule ;
un radiateur (40), disposé dans le compartiment (20) et communiquant avec le chemin d'écoulement de liquide de refroidissement du moteur (60) ;
un orifice de ventilation (30), disposé sur le compartiment (20) pour introduire de l'air pour échanger de la chaleur avec le radiateur (40) ou évacuer l'air qui a échangé de la chaleur avec le radiateur (40) ; **caractérisé en ce qu'**il comprend en outre
une unité de réduction de bruit (10), disposée sur l'orifice de ventilation (30) et comprenant une première grille (2), une deuxième grille (3) et une première partie élastique (8), dans lequel la première grille (2) et la deuxième grille (3) sont empilées le long d'une direction d'épaisseur d'une paroi du compartiment (20), une distance entre la deuxième grille (3) et la première grille (2) est réglable, la première partie élastique (8) est configurée pour pousser la première grille (2) vers la deuxième grille (3), la première grille (2) comprend une pluralité de premiers orifices d'air (21) disposés en parallèle et une première partie solide (22) située entre les deux premiers orifices d'air adjacents (21), la deuxième grille (3) comprend une pluralité de deuxièmes orifices d'air (31) disposés en parallèle et une deuxième partie solide (32) située entre les deux deuxièmes orifices d'air adjacents (31), et une projection de chaque deuxième ouverture d'air (31) dans un plan vertical à une direction d'épaisseur chevauche partiellement ou totalement une projection de la première partie solide (22) dans le plan, de sorte que l'air provenant de chaque deuxième ouverture d'air (31) entraîne la première grille (2) loin de la deuxième grille (3).

2. Le compartiment de puissance selon la revendication 1, comprenant en outre une troisième grille (1) disposée sur un côté de la première grille (2) éloigné de la deuxième grille (3), dans lequel la troisième grille (1) comprend une pluralité de troisièmes orifices d'air (11) disposés en parallèle et une troisième partie solide (12) située entre les deux troisièmes orifices d'air (11) adjacents, une projection de la troisième partie solide (12) dans le plan chevauche partiellement ou entièrement une projection de la première partie solide (22) dans le plan, le compartiment de puissance de véhicule comprend en outre une première partie de protection (7), la première partie de protection (7) s'étend autour du bord de la première partie solide (22) pour former une première chambre (5) conjointement avec la première partie solide (22) et la troisième partie solide (12) d'une manière enveloppante, et la première partie solide (22) est pourvue d'une pluralité de premiers trous traversants (23) communiquant avec la première chambre (5) de manière à former une structure d'absorption de son à résonance de plaque perforée.

3. Le compartiment de puissance selon la revendication 2, dans lequel la première partie de protection (7) comprend une partie flexible, et une extrémité de la partie flexible est reliée à la première partie solide (22) et l'autre extrémité est reliée à la troisième partie solide (12).

4. Le compartiment de puissance selon la revendication 2 ou 3, dans lequel une projection de chaque troisième ouverture d'air (11) dans le plan chevauche partiellement ou totalement une projection de chaque première ouverture d'air (21) dans le plan.

5. Le compartiment de puissance selon l'une quelconque des revendications 2 à 4, dans lequel la première partie élastique (8) est agencée entre la première grille (2) et la troisième grille (1), et une extrémité de la première partie élastique (8) vient en butée contre la première grille (2) et l'autre extrémité de celle-ci vient en butée contre la troisième grille (3) de manière à pousser la première grille (2) vers la deuxième grille (3).

6. Le compartiment de puissance selon l'une quelconque des revendications 2 à 5, dans lequel
la deuxième grille (3), la première grille (2) et la troisième grille (1) sont agencées séquentiellement d'amont en aval le long d'une direction de circulation d'air dans l'orifice de ventilation (30) ; ou
la deuxième grille (3), la première grille (2) et la troisième grille (1) sont agencées séquentiellement d'aval en amont le long d'une direction de circulation d'air dans l'orifice de ventilation (30).

7. Le compartiment de puissance selon l'une quelconque des revendications 1 à 6, dans lequel
la première grille (2) est montée dans l'orifice de ventilation (30) et est configurée pour coulisser le long de la direction d'épaisseur par rapport au compartiment (20) de manière à ajuster une distance entre la première grille (2) et la deuxième grille (3) ; et/ou
la troisième grille (1) est montée de manière fixe dans l'orifice de ventilation (30).

8. Le compartiment de puissance selon l'une quelconque des revendications 1 à 7, comprenant en outre une quatrième grille (4) agencée sur un côté de la deuxième grille (3) éloigné de la première grille (2), dans lequel la quatrième grille (4) comprend une pluralité de quatrièmes orifices d'air (41) agencés en parallèle et une quatrième partie solide (42) située entre les deux quatrièmes orifices d'air (41) adjacents, et une projection de la quatrième partie solide (42) dans le plan chevauche partiellement ou totalement une projection de la deuxième partie solide (32) dans le plan.

9. Le compartiment de puissance selon la revendication 8, dans lequel
une projection de chaque quatrième ouverture d'air (41) dans le plan chevauche partiellement ou totalement une projection de chaque deuxième ouverture d'air (31) dans le plan ; et/ou
une projection de chaque première ouverture d'air (21) dans le plan chevauche partiellement ou totalement une projection de la deuxième partie solide (32) dans le plan.

10. Le compartiment de puissance selon la revendication 8 ou 9, dans lequel
la deuxième grille (3) est montée dans l'orifice de ventilation (30) et est configurée pour coulisser le long de la direction d'épaisseur par rapport au compartiment (20) de manière à ajuster une distance entre la première grille (2) et la deuxième grille (3) ; et/ou
la quatrième grille (4) est montée de manière fixe dans l'orifice de ventilation (30).

11. Le compartiment de puissance selon la revendication 10, comprenant en outre une deuxième partie élastique (9) pour presser la deuxième grille (3) vers la première grille (2), dans lequel la deuxième partie élastique (9) est agencée entre la deuxième grille (3) et la quatrième grille (4).

12. Le compartiment de puissance selon l'une quelconque des revendications 8 à 11, comprenant en outre une deuxième partie de protection (35) s'étendant autour du bord de la deuxième partie solide (32) pour former une deuxième chambre (6) conjointement avec la deuxième partie solide (32) et la quatrième partie solide (42) d'une manière enveloppante, dans lequel la quatrième partie solide (42) est pourvue d'un deuxième trou traversant (43) communiquant avec la deuxième chambre (6) de manière à former une structure d'absorption de son à résonance de plaque perforée.

13. Le compartiment de puissance selon la revendication 12, dans lequel la deuxième partie de protection (35) comprend une première partie en forme de plaque (351) et une deuxième partie en forme de plaque (352) qui sont agencées entre la deuxième grille (3) et la quatrième grille (4) ;
la première partie en forme de plaque (351) et la deuxième partie en forme de plaque (352) sont reliées de manière fixe à deux côtés de la deuxième partie solide (32) respectivement, et la quatrième partie solide (42) est située entre la première partie en forme de plaque (351) et la deuxième partie en forme de plaque (352) et est capable de coulisser le long de la direction d'épaisseur par rapport à la première partie en forme de plaque (351) et la deuxième partie en forme de plaque (352) ; ou
la première partie en forme de plaque (351) et la deuxième partie en forme de plaque (352) sont reliées de manière fixe à deux côtés de la quatrième partie solide (42) respectivement, et la deuxième partie solide (32) est située entre la première partie en forme de plaque (351) et la deuxième partie en forme de plaque (352) et est capable de coulisser le long de la direction d'épaisseur par rapport à la première partie en forme de plaque (351) et la deuxième partie en forme de plaque (352).

14. Le compartiment de puissance selon l'une quelconque des revendications 8 à 13, dans lequel
la quatrième grille (4), la deuxième grille (3) et la première grille (2) sont agencées séquentiellement d'amont en aval le long d'une direction de circulation d'air dans l'orifice de ventilation (30) ; ou
la quatrième grille (4), la deuxième grille (3) et la première grille (2) sont agencées séquentiellement d'aval en amont le long d'une direction de circulation d'air dans l'orifice de ventilation (30).

15. Une machinerie d'ingénierie, comprenant le compartiment de puissance selon l'une quelconque des revendications 1 à 14.
